# EUROPEAN PATENT SPECIFICATION

(11) **EP 3 237 478 B1**
(45) Date of publication and mention of the grant of the patent: **10.04.2024**
(21) Application number: 15808529.0
(22) Date of filing: 02.12.2015
(51) Int. Cl.: C08G 18/32, C08G 18/66, C08G 18/75, C08G 18/42

(54) **THERMOPLASTIC POLYURETHANE COMPOSITION**
THERMOPLASTISCHE POLYURETHANZUSAMMENSETZUNG
COMPOSITION DE POLYURÉTHANE THERMOPLASTIQUE

(30) Priority: 22.12.2014 US 201462095293 P
(43) Date of publication of application: 01.11.2017
(73) Proprietor: Lubrizol Advanced Materials, Inc., Cleveland, OH 44141-3247 (US)
(72) Inventor: BERNABE, Romina Marin, E-08160 Barcelona (ES); MAKAL, Umit G., Cleveland, Ohio 44141-3247 (US); LU, Qiwei, Cleveland, Ohio 44141-3247 (US)
(74) Representative: Bradley, Josephine Mary
(86) International application number: PCT/US2015/063303
(87) International publication number: WO 2016/105886

(56) References cited:
- JP-A- H1 143 662
- JP-A- 2004 059 706
- JP-A- 2011 241 314
- US-A- 3 940 369
- DATABASE WPI Week 199137 Thomson Scientific, London, GB; AN 1991-270294 XP002755491, -& JP H03 177413 A (EPOZOLE KK) 1 August 1991 (1991-08-01)

## Description

### FIELD OF THE INVENTION

The present invention relates to a thermoplastic polyurethane (TPU) compositions which can be used in articles where a TPU having high heat resistance and high chemical resistance, and in some cases, transparency or high gloss, are desirable.

### BACKGROUND OF THE INVENTION

It is often desirable for articles made from thermoplastic polyurethanes to have high heat resistance and good chemical resistance. Such articles include, but are not limited to molded articles used in both the interior and exterior of automobiles, as well as electronics and related components such as cell phones, tablets, watch bands, etc. In addition, desirable appearance and finish is important for many articles. One type of desirable finish is referred to as "piano black," which is a black, glossy finish that resembles the appearance of a grand piano. This type of finish is often desired in automotive applications, both in the interior, on parts such as dashboard consoles, shifter handles, and radio controls, and in the exterior on parts such as headlamps and roof components. Often the piano black look is created by placing a coating on the part. It would be desirable to have a thermoplastic polyurethane to create molded articles that have high heat resistance and chemical resistance that, in some embodiments, are also capable of providing a piano black finish or that are transparent and glossy.

JP2011241314 (A) discloses an aliphatic polyester polyurethane which is a copolymer having a number-average molecular weight of 20,000-100,000 and expressed by general formula (1), 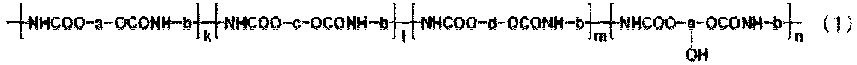 wherein a is a bivalent aliphatic polyester segment; b is a bivalent hydrocarbon group; c is a bivalent alicyclic organic group; d is a bivalent aliphatic organic group; e is a trivalent aliphatic hydrocarbon group; and k, l, m and n each represents a mole ratio and satisfies following relationships: k/(k+l+m+n)=0.05-0.7; l/(k+l+m+n)=0.3-0.8; m/(k+l+m+n)=0-0.4; and n/(k+l+m+n)=0-0.2, respectively.

JPH1143662 (A) discloses a urethane-based adhesive composition which comprises an urethane resin composed of 1 mole polyol having hydroxyl groups at both ends and, as the reaction component, 2-5 moles diisocyanate and 1-4 moles chain extender and 30 mole % or more chain extender being an alicyclic diol in which part of the carbons constituting the ring may be substituted with an oxygen atom. As the alicyclic diol, 3,9-bis(1,1-dimethyl-2-hydroxy-ethyl)-2,4,8,10-tetraoxaspiro-[5,5]undecane and 2,2-bis(4-cyclohexanol) propane can be used.

US3940369 (A) discloses a method for preparing a polyurethane which comprises reacting 3,9-bis(2-hydrazidoethyl)-2,4,8,10-tetraoxaspiro-[5,5]-undecane as a chain extender with a pre-polymer having terminal isocyanate groups produced by reacting an organic polyisocyanate with a hydroxyl-containing compound having a number average molecular weight ranging from 400 to 5000.

JP2004059706 (A) discloses a process for producing a thermoplastic polyurethane elastomer having the shape-memory property which comprises reacting (a) an organic polyisocyanate, (b) a polycarbonate diol, and (c) a chain extender having an active hydrogen group capable of reacting with the organic polyisocyanate.

JPH03177413 (A) discloses the preparation of a high modulus polyurethane elastomer by reaction between each specific diisocyanate and aliphatic polyetherdiol, etc., followed by polyaddition reaction of a chain extender.

### SUMMARY OF THE INVENTION

The present invention provides a thermoplastic polyurethane (TPU) which comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, and wherein the alkylene substitiuted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

The present invention further provides a thermoplastic polyurethane (TPU) which comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, (3) a polycaprolactone polyester polyol, and (4) an additional chain extender, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

The present invention further discloses a process of making the TPUs, comprising reacting (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine. The TPU may be prepared by any known or hereafter developed methods for making TPU.

The present invention further discloses an article which comprises the described TPU.

The invention further discloses a method of increasing the heat and chemical resistance of an article, where the article comprises an effective amount of a TPU wherein the TPU comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxyl group or an amine where the amine is a primary or secondary amine.

In another embodiment, the invention further discloses a method of making a transparent or glossy TPU, where the TPU comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

### DETAILED DESCRIPTION OF THE INVENTION

The process to make the thermoplastic polyurethane (TPU) of this invention includes a reaction with an alkylene substituted spirocyclic compound. The obtained TPU exhibits a significant increase in heat resistance and chemical resistance, including but not limit to cream (such as hand lotion or sunscreen) resistance. In one embodiment, the TPU is transparent. In another embodiment, the TPU has a gloss rating of at least 70 gloss units, in one embodiment, 70 - 100 gloss units, and in another embodiment, greather than 100 gloss units as measured by a Picogloss Model 503 glossometer from Erichsen at a 20° angle for a 2mm thick molded part. In another embodiment, the TPU retains at least 65%, or at least 70% of its initial gloss after a chemical resistance test (such as a suncream resistance test).

In one aspect, the TPU of the present invention includes the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol and wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine. The technique under which these reactants are polymerized to synthesize the TPU may be conducted utilizing conventional processing equipment, catalysts, and processes. However, the polymerization is conducted in a manner that will result in the desired polymer characteristics or properties. The types and levels of aliphatic polyisocyanate, polyester polyol and alkylene substituted spirocyclic compound comprising an alkylene substituted saturated spirocyclic-diol, an alkylene substituted saturated spirocyclic-diamine, or a combination thereof can be adjusted to attain the desired set of chemical and physical characteristics for the polymer being synthesized. The polymerization techniques useful in making the TPUs of this invention include conventional methods, such as reactive extrusion, batch processing, solution polymerization, and cast polymerization.

### The Aliphatic Polyisocyanate

In one embodiment, the polyisocyanate used in synthesizing the thermoplastic polyurethane is an aliphatic polyisocyanate, such as an aliphatic diisocyanate. In some embodiments, the polyisocyanate component in the present invention is essentially free of, or even completely free of aromatic diisocyanates. Moreover, the use of multifunctional isocyanate compounds, i.e., triisocyanates, etc., which cause undesirable premature crosslinking, are generally avoided and thus the amount used, if any, is generally less than 4 mole percent in one aspect, and less than 2 mole percent in another aspect, based upon the total moles of all of the various isocyanates used.

Suitable aliphatic diisocyanates include hexamethylene-1,6-diisocyanate (HDI), isophorone diisocyanate (IPDI), 1,4-cyclohexyl diisocyanate (CHDI), decane-1,10-diisocyanate, lysine diisocyanate (LDI), 1,4-butane diisocyanate (BDI), 1,4-bis(isocyantomethyl) cyclohexane (1,4-H6XDI), and dicyclohexylmethane-4,4'-diisocyanate (H12MDI). Mixtures of two or more aliphatic polyisocyanates may be used. In some embodiments, the polyisocyanate is H12MDI. Dimers and trimers of the above diisocyanates may also be used as well as a blend of two or more diisocyanates may be used.

The mole ratio of the one or more diisocyanates is generally from about 0.95 to about 1.05 in one aspect, and from about 0.98 to about 1.03 moles per mole in another aspect, of the total moles of the alkylene substituted spirocyclic compound.

### The Alkylene Substituted Spirocyclic Compound

In one embodiment, the alkylene substituted spirocyclic compound comprises an alkylene substituted saturated spirocyclic-diol, an alkylene substituted saturated spirocyclic-diamine, or a combination thereof and each ring is substituted with an alkylene group that contains from 1 to 4 carbon atoms, terminated by a hydroxy group or an amine where the amine is a primary or secondary amine. In one embodiment, the alkylene substituted spirocyclic compound is a spiroheterocycle containing 2 heteroatoms in each ring, and the heteroatoms are oxygen, nitrogen, sulfur or phosphorous. In one embodiment, the alkylene substituted spirocyclic compound is a spiroheterocycle containing 2 heteroatoms in each ring and the heteroatoms are oxygen or nitrogen. In one embodiment, the alkylene substituted spirocyclic compound is a spiroheterocycle containing 2 heteroatoms in each ring and the heteroatoms are oxygen.

In one embodiment, the alkylene substituted spirocyclic compound shows a structural formula: 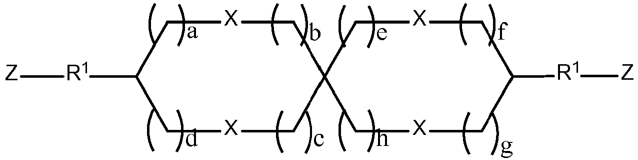 wherein each X is independently selected from O, CHR², NR², S, PR², wherein each R² represents a hydrogen atom or an alkyl group containing from 1 to about 6 carbon atoms, each R¹ is an alkylene containing from 1 to 4 carbon atoms, which may be linear or branched, and each Z is selected from -OH or -NHR³ wherein R³ represents a hydrogen atom or an alkyl group containing from 1 to about 6 carbon atoms, wherein a, b, c, d, e, f, g and h are each independently an integer from 0 to 2 so long as the sum of a, b, c, and d is from 1 to 3, and the sum of e, f, g and h is from 1 to 3. In one embodiment, a is equal to g, b is equal to h, c is equal to e and d is equal to f. In one embodiment, all X are identical. In one embodiment, all X are identically selected from O or NR², wherein R² represents a hydrogen atom or an alkyl group containing from 1 to about 6 carbon atoms, a is equal to g, b is equal to h, c is equal to e and d is equal to f. In one embodiment, the spirocyclic-dialkylene compound contains two 6-membered ring, X is independently selected from O or NR², wherein R² represents a hydrogen atom or an alkyl group containing from 1 to about 6 carbon atoms, R¹ is an alkylene containing from 1 to 4 carbon atoms, Z is -OH or NH₂, and either (i) a is 0, b is 1, c is 1, d is 0, e is 1, f is 0, g is 0 and h is 1 or (ii) a is 1, b is 0, c is 0, d is 1, e is 0, f is 1, g is 1 and h is 0. In one embodiment, the spirocyclic-dialkylene compound contains two 6-membered ring, X is identically selected from O or NR², wherein R² represents a hydrogen atom or an alkyl group containing from 1 to about 6 carbon atoms, R¹ is an alkylene containing from 1 to 4 carbon atoms, Z is -OH or NH₂, and either (i) a is 0, b is 1, c is 1, d is 0, e is 1, f is 0, g is 0 and h is 1 or (ii) a is 1, b is 0, c is 0, d is 1, e is 0, f is 1, g is 1 and h is 0. In one embodiment, the spirocyclic-dialkylene compound contains two 6-membered ring, X is O, R¹ is 1,1-dimethylethyl, Z is -OH, and either (i) a is 0, b is 1, c is 1, d is 0, e is 1, f is 0, g is 0 and h is 1 or (ii) a is 1, b is 0, c is 0, d is 1, e is 0, f is 1, g is 1 and h is 0.

In one embodiment, the alkylene substituted spirocyclic compound shows a structural formula: 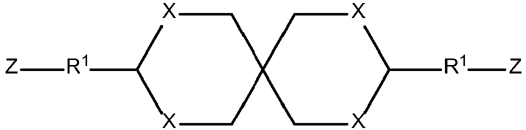 wherein each X is independently selected from O, CHR², NR², S, PR², wherein each R² represents a hydrogen atom or an alkyl group containing from 1 to about 6 carbon atoms, each R¹ is an alkylene containing from 1 to 4 carbon atoms, which may be linear or branched, and each Z is selected from -OH or -NHR³ wherein R³ represents a hydrogen atom or an alkyl group containing from 1 to about 6 carbon atoms. In one embodiment, X is identically selected from O, CHR², NR², S, PR², wherein each R² represents a hydrogen atom or an alkyl group containing from 1 to about 6 carbon atoms. In one embodiment, X is O, R¹ is 1,1-dimethylethyl, and Z is -OH.

### The Polyester Polyol

Polyester polyols useful in the present invention include polyester polyols produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. In some embodiments, the polyester polyol is a linear polyester polyol having a number average molecular weight (Mn) of from about 500 to about 10,000, from about 700 to about 5,000, or from about 700 to about 4,000, and generally have an acid number less than 1.3 or less than 0.5. The molecular weight is determined by assay of the terminal functional groups and is related to the number average molecular weight. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, and the like. Anhydrides of the above dicarboxylic acids such as phthalic anhydride, tetrahydrophthalic anhydride, or the like, can also be used. The glycols which are reacted to form a desirable polyester intermediate can be aliphatic, aromatic, or combinations thereof, including any of the glycols described above in the chain extender section, and have a total of from 2 to 20 or from 2 to 12 carbon atoms. Suitable examples include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and mixtures thereof.

The polyester polyol is a polycaprolactone polyester polyol. Suitable polycaprolactone polyols include one or more polycaprolactone polyols. The polycaprolactone polyols useful in the technology described herein include polyester diols derived from caprolactone monomers. The polycaprolactone polyols are terminated by primary hydroxyl groups. Suitable polycaprolactone polyols may be made from ε-caprolactone and a bifunctional initiator such as diethylene glycol, 1,4-butanediol, or any of the other glycols and/or diols listed herein. Useful examples include CAPA^{™} 2202A, a 2,000 number average molecular weight (Mn) linear polyester diol, and CAPA^{™} 2302A, a 3,000 Mn linear polyester diol, both of which are commercially available from Perstorp Polyols Inc. These materials may also be described as polymers of 2-oxepanone and 1,4-butanediol.

The polycaprolactone polyols may be prepared from 2-oxepanone and a diol, where the diol may be 1,4-butanediol, diethylene glycol, monoethylene glycol, 1,6-hexanediol, 2,2-dimethyl-1,3-propanediol, or any combination thereof. In some embodiments, the diol used to prepare the polycaprolactone polyol is linear. In some embodiments, the polycaprolactone polyol is prepared from 1,4-butanediol. In some embodiments, the polycaprolactone polyol has a number average molecular weight from 500 to 10,000, or from 500 to 5,000, or from 1,000 or even 2,000 to 4,000 or even 3,000.

The present invention further relates to a thermoplastic polyurethane (TPU) which comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, (3) a polycaprolactone polyester polyol, and (4) an additional chain extender, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

In one embodiment, the additional chain extender is an aliphatic or cycloaliphatic diamine or glycol having from 2 to 20, or 2 to 12, or 2 to 10 carbon atoms, or combinations thereof. Suitable examples include ethylene glycol, diethylene glycol, propylene glycol, dipropylene glycol, 1,3-propanediol, 1,4-butanediol (BDO), 1,6-hexanediol (HDO), 1,3-butanediol, 1,5-pentanediol, neopentylglycol, 1,4-cyclohexanedimethanol (CHDM), hexamethylenediol, heptanediol, nonanediol, dodecanediol, 2-ethyl-1,3-hexanediol, 2,2,4-trimethyl pentane-1,3-diol, 1,4-cyclohexanedimethylol, 3-methyl-1,5-pentanediol, ethylenediamine, butanediamine, hexamethylenediamine, and the like, as well as mixtures thereof. In some embodiments the additional chain extender includes BDO, HDO, 3-methyl-1,5-pentanediol, or a combination thereof. In some embodiments, the additional chain extender includes BDO. Other glycols, such as aromatic glycols or diamines, like for example hydroxyethyl resorcinol (HER) or 2,2-bis[4-(2-hydroxyethoxy)phenyl]propane (HEPP), could be used, but in some embodiments the TPUs described herein are essentially free of or even completely free of such materials.

TPU compositions made in accordance with the present invention may have a Shore D hardness of 40D to 70D. In one embodiment, the TPU comprises the reaction product of 15% to 40% by weight aliphatic polyisocyanate, 35% to 60% by weight polyester polyol, and 15% to 35% by weight alkylene substituted spirocyclic compound comprising an alkylene substituted saturated spirocyclic-diol, an alkylene substituted saturated spirocyclic-diamine, or a combination thereof.

In another aspect, the present invention further discloses a process of making the TPU, comprising reacting (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol and wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine; resulting in a TPU composition with high heat and chemical resistance.

Alternatively, in one embodiment, the reaction in step (a) further includes (4) an additional chain extender.

The process to produce the TPU polymer of this invention can utilize conventional and hereafter developed TPU manufacturing equipment and known or hereafter developed processes. The three reactants (the polyester polyol, the aliphatic polyisocyanate, and the alkylene substituted spirocyclic compound comprising an alkylene substituted saturated spirocyclic-diol, an alkylene substituted saturated spirocyclic-diamine, or a combination thereof) are reacted together to form the TPU useful in this invention.

In one embodiment, the process is a so-called "one-shot" process where all three reactants are added to an extruder reactor and reacted. The equivalent weight amount of the diisocyanate to the total equivalent weight amount of the hydroxyl containing components, that is, the polyol intermediate and the chain extender glycol, can be from about 0.95 to about 1.10, or from about 0.96 to about 1.02, and even from about 0.97 to about 1.005. An optional urethane catalyst may be used in the reaction in some embodiments.

The TPU of the present invention can also be prepared utilizing a pre-polymer process. In the pre-polymer route, the polyol intermediates are reacted with generally an equivalent excess of one or more diisocyanates to form a pre-polymer solution having free or unreacted diisocyanate therein. An optional urethane catalyst may be use in the reaction in some embodiments. Subsequently, a chain extender, as noted above, is added in an equivalent amount generally equal to the isocyanate end groups as well as to any free or unreacted diisocyanate compounds. The overall equivalent ratio of the total diisocyanate to the total equivalent of the polyol intermediate and the chain extender is thus from about 0.95 to about 1.10, or from about 0.96 to about 1.02 and even from about 0.97 to about 1.05. The chain extension reaction temperature is generally from about 100°C to about 250°C or from about 200°C to about 250°C. Typically, the pre-polymer route can be carried out in any conventional device including an extruder. In such embodiments, the polyol intermediates are reacted with an equivalent excess of a diisocyanate in a first portion of the extruder to form a pre-polymer solution and subsequently the chain extender is added at a downstream portion and reacted with the pre-polymer solution. Any conventional extruder can be utilized, including extruders equipped with barrier screws having a length to diameter ratio of at least 20 and in some embodiments at least 25.

In one embodiment, an aliphatic polyisocyanate, an alkylene substituted spirocyclic compound comprising an alkylene substituted saturated spirocyclic-diol, an alkylene substituted saturated spirocyclic-diamine, or a combination thereof, and a polyester polyol are mixed on a single or twin screw extruder with multiple heat zones and multiple feed ports between its feed end and its die end. The ingredients may be added at one or more of the feed ports and the resulting TPU composition that exits the die end of the extruder may be pelletized.

In one useful embodiment, the aliphatic polyisocyanate, the alkylene substituted spirocyclic compound and the polyester polyol disclosed hereinabove are generally added together and reacted in accordance with standard polyurethane synthesis methodology as described herein. The TPU forming components of the present invention can be melt polymerized in a suitable mixer, such as an internal mixer known as a Banbury mixer, or in an extruder. Suitable processing or polymerization temperatures are from about 100°C to about 250°C in one aspect, and from about 200°C to about 250°C in another aspect. Suitable mixing times in order to enable the various components to react and form the TPU polymers of the present invention are generally from about 2 to about 10 minutes in one aspect, and from about 3 to about 5 minutes in another aspect.

Optionally, it may be desirable to utilize catalysts such as stannous and other metal carboxylates as well as tertiary amines. Examples of metal carboxylate catalysts include stannous octoate, dibutyltin dilaurate, phenyl mercuric propionate, lead octoate, iron acetylacetonate, magnesium acetylacetonate, and the like. Examples of tertiary amine catalysts include triethyleneamine, and the like. The amount of the one or more catalysts is low, generally from about 50 to about 100 parts by weight per million parts by weight of the end TPU polymer formed.

The weight average molecular weight (Mw) of the TPU polymer of the present invention range from about 60,000 to about 250,000 Daltons in one aspect, and from about 100,000 to about 200,000 Daltons in another aspect. The Mw of the TPU polymer is measured according to gel permeation chromatography (GPC) against polystyrene standard.

The TPU polymers of the present invention can be mixed with various conventional additives or compounding agents, such as antioxidants, biocides, fungicides, antimicrobial agents, anti-static additives, plasticizers, fillers, extenders, flame retardants, impact modifiers, pigments, lubricants, mold release agents, rheology modifiers, UV absorbers, and the like. The level of conventional additives will depend on the final properties and cost of the desired end-use application, as is well known to those skilled in the art of compounding TPUs. These additional additives can be incorporated into the components of, or into the reaction mixture for the preparation of the TPU, or after making the TPU. In another process, all the materials can be mixed with the TPU and then melted or they can be incorporated directly into the melt of the TPU composition.

In one embodiment, the flame retardants mixed with the TPU polymer of the invention include organic flame retardants comprising a phosphinate compound based on an organic phosphinic salt. Organic phosphinates are a recent addition to the sphere of flame retardants used in engineering thermoplastics. One preferred phosphinate is marketed as the propriety compound Exolit^{®} OP 1311, available from Clariant GmbH, Germany. An organic phosphinate is used in conjunction with other organic flame retardants in an exemplary embodiment of the flame retardant package. The phosphinate compound may be present in an exemplary embodiment of the flame retardant TPU composition in an amount from about 5 to about 40 weight percent, more preferably from about 15 to about 25 weight percent, based on the total weight of the TPU composition.

Other organic flame retardant components include organic phosphates such as triaryl phosphates, and preferably a triphenyl phosphate, and more preferably a proprietary phosphorus based flame retardant, namely NcendX^{®} P-30 from Albermarle Corporation. The organic phosphate may be present in an exemplary embodiment in an amount from about 5 to about 20 weight percent, more preferably from about 5 to about 10 weight percent, based on the total weight of the TPU composition.

Other organic flame retardant components include polyhydric alcohols such as pentaerythritol and dipentaerythritol. The polyhydric alcohol may be present in an exemplary embodiment in an amount from about 0.1 to about 15 weight percent, more preferably from about 2.5 to about 10 weight percent, based on the total weight of the TPU composition. The composition may further include from about 0 to about 10 weight percent of ammonium pentaborate or zinc borate.

In addition, various conventional inorganic flame retardant components may be employed in the flame retardant TPU. Suitable inorganic flame retardants include any of those known to those skilled in the art, such as ammonium phosphate, ammonium polyphosphate, calcium carbonate, antimony oxide, and clay including montmorillonite clay which is often referred to as nano-clay. The inorganic flame retardants may be used at a level of from 0 to about 5 weight percent of the TPU composition.

Thus, in an exemplary embodiment, a flame retardant thermoplastic polyurethane composition comprises at least one thermoplastic polyurethane polymer and a flame retardant package comprising an organic phosphinate compound, an organic phosphate compound, and a polyhydric alcohol. In other exemplary embodiments, inorganic flame retardant fillers may be incorporated into the flame retardant package.

In another aspect, the present invention refers to an article comprising the TPU of the present invention. Articles comprising the TPU of the present invention may be any molded articles, such as injection molded articles. In one embodiment, such TPU can be used to make articles where it is desirable to have a non-yellowing, transparent, or piano black finish. In still other embodiments, the articles containing the various composition described above include any article that may be exposed to high temperatures or chemicals, such as creams, including hand lotions or sunscreen creams, during use, and especially such articles which have not been made using thermoplastic polyurethanes in the past because of such materials having insufficient high temperature resistance or chemical resistance.

The compositions of the invention or any blends thereof may be used to prepare the molded products of this invention in any molding process. The molding processes are well known to those of ordinary skill in the art and include but are not limited to, cast molding, cold forming matched-die molding, compression molding, foam molding, injection molding, gas-assisted injection molding, profile co-extrusion, profile extrusion, rotational molding, sheet extrusion, slush molding, spray techniques, thermoforming, transfer molding, vacuum forming, wet lay-up or contact molding, blow molding, extrusion blow molding, injection blow molding, and injection stretch blow molding or combinations thereof.

The compositions may be shaped into desirable end use articles by any suitable means known in the art. Thermoforming is a process of forming at least one pliable plastic sheet into a desired shape. An embodiment of a thermoforming sequence is described, however this should not be construed as limiting thermoforming methods useful with the compositions of this invention. First, an extrudate film of the composition of this invention (and any other layers or materials) is placed on a shuttle rack to hold it during heating. The shuttle rack indexes into the oven which pre-heats the film before forming. Once the film is heated, the shuttle rack indexes back to the forming tool. The film is then vacuumed onto the forming tool to hold it in place and the forming tool is closed. The forming tool can be either "male" or "female" type tools. The tool stays closed to cool the film and the tool is then opened. The shaped laminate is then removed from the tool.

In yet another embodiment of the formation and shaping process, profile co-extrusion can be used. The profile co-extrusion process parameters are as above for the blow molding process, except the die temperatures (dual zone top and bottom) range from 150 to 235°C, the feed blocks are from 90 to 250°C, and the water cooling tank-temperatures are from 10 to 40°C.

In another embodiment, articles may be made by injection molding processes. In injection molding, a shaped laminate is placed into the injection molding tool. The mold is closed and the substrate material is injected into the mold. The substrate material has a melt temperature between 200 and 300°C in one embodiment and from 215 and 250°C in another embodiment is injected into the mold at an injection speed of between 2 and 10 seconds. After injection, the material is packed or held at a predetermined time and pressure to make the part dimensionally and aesthetically correct. Typical time periods are from 5 to 25 seconds and pressures from 1,380 to 10,400 kPa. The mold is cooled between 10 and 70°C to cool the substrate. The temperature will depend on the desired gloss and appearance desired. Typical cooling time is from 10 to 30 seconds, depending on part on the thickness. Finally, the mold is opened and the shaped composite article ejected.

In yet another embodiment of the invention, the compositions of this invention may be secured to a substrate material using a blow molding operation. Blow molding is particularly useful in such applications as for making closed articles such as fuel tanks and other fluid containers, playground equipment, outdoor furniture and small enclosed structures. In one embodiment of this process, compositions of this invention are extruded through a multi-layer head, followed by placement of the uncooled laminate into a parison in the mold. The mold, with either male or female patterns inside, is then closed and air is blown into the mold to form the part.

Articles made with the TPU of the current invention may also be made by adhereing the TPU to or over another polymeric part, in a process known as over-molding. The over-molding process comprises the following: (a) a substrate formed from a composition comprising a polar polymer, and (b) a molded overlay formed from an inventive composition. In one embodiment, the polar polymer is a polycarbonate (PC), ABS, PC/ABS, PBT/ABS, or nylon. The invention also provides an over-molded article comprising the following: (a) a substrate formed from an inventive composition, and (b) a molded overlay formed from a composition comprising a polar polymer.

The invention further provides for an article where the thermoplastic polyurethane composition is extruded. That is, the invention provides for an article which is made by forcing molten TPU through a die to form a shape with a fixed cross-section.

In another aspect, the present invention refers to a method of increase the heat resistance and chemical resistance of an article, where the article comprises an effective amount of a thermoplastic polyurethane (TPU) wherein the TPU comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a a primary or secondary amine. This method includes the step of of using (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine in the preparation of a TPU. Any of the TPU materials described above may be used in these methods.

The present technology also includes the use of a thermoplastic polyurethane (TPU) wherein the TPU comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine to increase the heat resistance of an article. These uses include using (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine in the preparation of a TPU. Any of the TPU materials described above may be used in these uses.

Various preferred features and embodiments will be described below by way of non-limiting illustration.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, byproducts, derivatives, and other such materials which are normally understood to be present in the commercial grade.

Each of the documents referred to above is incorporated herein by reference, including any prior applications, whether or not specifically listed above, from which priority is claimed. The mention of any document is not an admission that such document qualifies as prior art or constitutes the general knowledge of the skilled person in any jurisdiction. Except in the Examples, or where otherwise explicitly indicated, all numerical quantities in this description specifying amounts of materials, reaction conditions, molecular weights, number of carbon atoms, and the like, are to be understood as modified by the word "about". It is to be understood that the upper and lower amount, range, and ratio limits set forth herein may be independently combined. Similarly, the ranges and amounts for each element of the invention can be used together with ranges or amounts for any of the other elements.

### EXAMPLES

In these examples, the TPUs are synthesized from the components set forth in Table 1. The Comparative Examples are based on a polycaprolactone polyester polyol, 1,4-butane diol chain extender, and H12MDI. Examples 1 through 5 use the polyester polyols listed in Table 1 and H12MDI, but include an alklyene substituted spirocyclic compound in accordance with the invention.

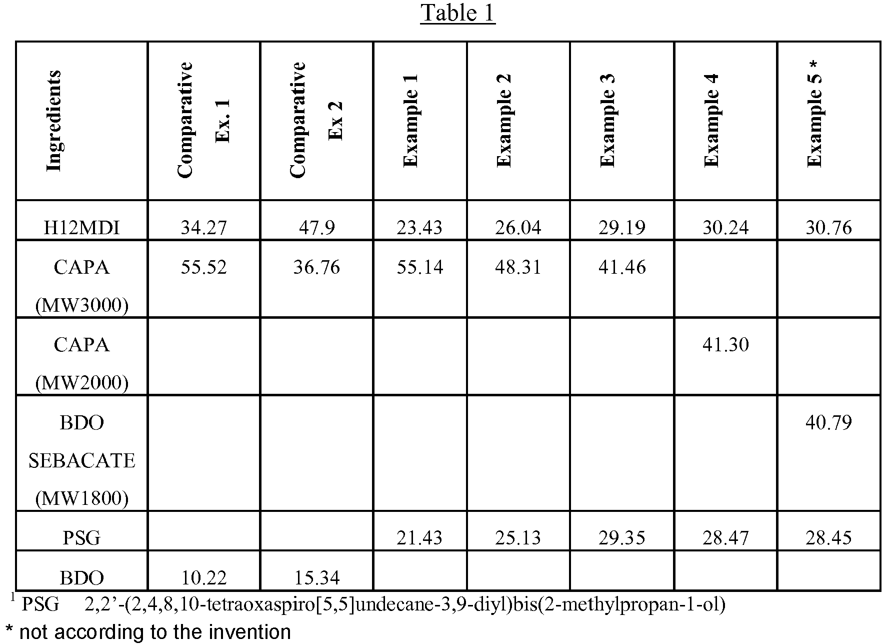

Various properties of the TPU's prepared in Table 1 were measured and are summarized in Table 2. Shore D hardness was measured according to ASTM D2240. Heat resistance was measured by Dynamic Mechanical Analysis (DMA) in dual cantilever mode, at 1 Hz frequency and applying a temperature sweep from -100°C to 200°C. Sun cream resistance was measured according to the following procedure: Sample plates (obtained by injection molding, which are 2mm thick) with a smooth surface that have been conditioned for 7 days at temperatures between 18°C and 28°C are prepared. The following testing procedure is followed: 1. A piece of gauze is placed over the samples, covering all the test surface; 2. A cream (Rich Moisturizing Sunscreen Lotion 40 High Protection from Isdin) is applied over the gauze until all gauze holes are filled (the cream thickness is approximately 1-2mm); 3. The sample is subjected to 80°C temperature in a convection oven for 24 hours; 4. The gauze is removed and the remaining cream is cleaned with a wipe. Before evaluation, the samples are conditioned for 4 hours at temperature between 18°C and 28°C. Assessment is visual and a rating of 1 (worst) to 5(best) is assigned for transparency. The effect can also be quantified by measuring gloss changes with a glossimeter. Gloss is measured with a Picogloss Model 503 from Erichsen at 20° angle in 2mm thick molded parts before and after the cream test.

**Table 2**

| | **Comparative Ex. 1** | **Comparative Ex 2** |
|---|---|---|
| **Hardness** | 41.0D | 65.2D |
| **Melting End** | 145.5 °C | 141.8 °C |
| **Recrystallization Peak** | Not observed | Not observed |
| **Storage Modulus Onset Temp** | 121.5 °C | 106.4 °C |
| **Gloss Retention %** | 41 | 44 |
| **Transparency (visual rating)^{a}** | 5 | 5 |
| **Sun cream Resistance** | Significant surface deformation | Significant surface deformation |

**Table 3**

| | **Example 1** | **Example 2** | **Example 3** | **Example 4** | **Example 5*** |
|---|---|---|---|---|---|
| **Hardness** | 45.2D | 56.6D | 63.4D | 63.9D | 68.1D |
| **Melting End** | 247 °C | 256.6 °C | 258.0 °C | 255.9 °C | 260.1°C |
| **Recrystallization Peak** | 69.9 °C | 83.5 °C | Not observed | Not observed | Not observed |
| **Storage Modulus Onset Temp** | 155.5 °C | 160.1 °C | 171.3 °C | 168.6 °C | 173.9 °C |
| **Gloss Retention %** | 71 | 69 | 77 | 78 | 72 |
| **Transparency (visual rating)^{a}** | 5 | 5 | 5 | 5 | 5 |
| **Sun cream resistance** | No observable surface deformation | No observable surface deformation | No observable surface deformation | Very slight surface deformation | No observable surface deformation |

| | | | | | |
|---|---|---|---|---|---|
| ^{a} Visual evaluation 0 to 5 (with 5 being best transparency rating). * not according to the invention | | | | | |

As shown above, TPU compositions made according to the present invention provide higher heat resistance and chemical resistance that TPU made with conventional chain extenders. In some embodiments, they also provide better gloss ratings.

All molecular weight values provided herein are weight average molecular weights unless otherwise noted. All molecular weight values have been determined by GPC analysis unless otherwise noted.

As used herein, the transitional term "comprising", which is synonymous with "including", "containing", or "characterized by", is inclusive or open-ended and does not exclude additional, un-recited elements or method steps. However, in each recitation of "comprising" herein, it is intended that the term also encompass, as alternative embodiments, the phrases "consisting essentially of" and "consisting of", where "consisting of" excludes any element or step not specified and "consisting essentially of" permits the inclusion of additional un-recited elements or steps that do not materially affect the essential or basic and novel characteristics of the composition or method under consideration.

## Claims

1. A thermoplastic polyurethane (TPU) comprising the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

2. The thermoplastic polyurethane of claim 1, wherein the alkylene substituted spirocyclic compound is a spiroheterocycle containing 2 heteroatoms in each ring, where the heteroatoms are oxygen, nitrogen, sulfur or phosphorous.

3. The thermoplastic polyurethane of claim 1, wherein the structural formula of the alkylene substituted spirocyclic compound is: 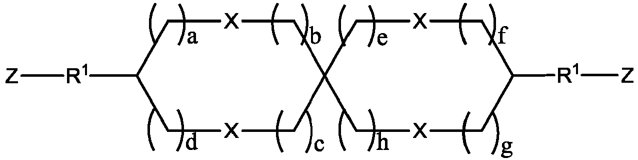 wherein each X is independently selected from O, CHR², NR², S, PR², wherein each R² represents a hydrogen atom or an alkyl group containing from 1 to about 6 carbon atoms, each R¹ is an alkylene containing from 1 to 4 carbon atoms and each Z is selected from -OH or -NHR³ wherein R³ represents a hydrogen atom or an alkyl group containing from 1 to about 6 carbon atoms, wherein a, b, c, d, e, f, g and h are each independently an integer from 0 to 2 so long as the sum of a, b, c, and d is from 1 to 3, and the sum of e, f, g and h is from 1 to 3.

4. The thermoplastic polyurethane of claim 3, wherein a is equal to g, b is equal to h, c is equal to e and d is equal to f.

5. The thermoplastic polyurethane of claim 3, wherein the spirocyclic-dialkylene compound contains two 6-membered ring, X is O, R¹ is 1,1-dimethylethyl, Z is -OH, and where either (i) a is 0, b is 1, c is 1, d is 0, e is 1, f is 0, g is 0 and h is 1 or (ii) a is 1, b is 0, c is 0, d is 1, e is 0, f is 1, g is 1 and h is 0.

6. The thermoplastic polyurethane of claim 1, wherein the structural formula of the spirocyclic-dialkylene compound is: 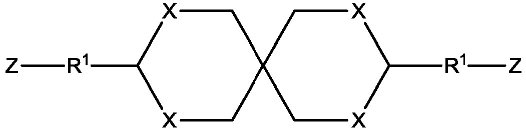 wherein each X is selected from O, CHR², NR², S, PR², wherein each R² represents a hydrogen atom or an alkyl group containing from 1 to about 6 carbon atoms, each R¹ is an alkylene containing from 1 to 4 carbon atoms and each Z is selected from -OH or -NHR³ wherein R³ represents a hydrogen atom or an alkyl group containing from 1 to about 6 carbon atoms.

7. The thermoplastic polyurethane of claim 6 wherein X is O, R¹ is 1,1-dimethylethyl, and Z is -OH.

8. The thermoplastic polyurethane of any of the claims 1 to 7 wherein the aliphatic polyisocyanate comprises H12MDI.

9. The thermoplastic polyurethane of any of the claims 1 to 7, further comprising (4) an additional chain extender comprising an aliphatic or cycloaliphatic diamine or glycol.

10. A process of making a thermoplastic polyurethane (TPU) comprising the steps of: (I) reacting (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol;
wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

11. An article comprising a thermoplastic polyurethane (TPU), according to claim 1.

12. A method of increasing the heat and chemical resistance of an article, where the article comprises an effective amount of a thermoplastic polyurethane (TPU) wherein the TPU comprises the reaction product of (1) an aliphatic polyisocyanate, (2) an alkylene substituted spirocyclic compound comprising an alkylene substituted saturated spirocyclic-diol, an alkylene substituted saturated spirocyclic-diamine, or a combination thereof, and (3) a polycaprolactone polyester polyol, wherein the alkylene substituted spirocyclic compound contains two rings containing from 5 to 7 atoms per ring, and where each ring is substituted with an alkylene group that contains from 1 to 4 carbon atoms, terminated by a hydroxy group or an amine where the amine is a primary or secondary amine.

## Patentansprüche

1. Thermoplastisches Polyurethan (TPU), umfassend das Reaktionsprodukt von (1) einem aliphatischen Polyisocyanat, (2) einer Alkylen-substituierten spirocyclischen Verbindung, umfassend ein Alkylen-substituiertes gesättigtes spirocyclisches Diol, ein Alkylen-substituiertes gesättigtes spirocyclisches Diamin oder eine Kombination davon, und (3) einem Polycaprolactonpolyesterpolyol, wobei die Alkylen-substituierte spirocyclische Verbindung zwei Ringe enthält, die von 5 bis 7 Atome pro Ring enthalten, und wobei jeder Ring mit einer Alkylengruppe substituiert ist, die von 1 bis 4 Kohlenstoffatome enthält, die durch eine Hydroxygruppe oder ein Amin terminiert sind, wobei das Amin ein primäres oder ein sekundäres Amin ist.

2. Thermoplastisches Polyurethan nach Anspruch 1, wobei die Alkylen-substituierte spirocyclische Verbindung ein Spiroheterocyclus ist, der 2 Heteroatome in jedem Ring enthält, wobei die Heteroatome Sauerstoff, Stickstoff, Schwefel oder Phosphor sind.

3. Thermoplastisches Polyurethan nach Anspruch 1, wobei die Strukturformel der Alkylen-substituierten spirocyclischen Verbindung ist: 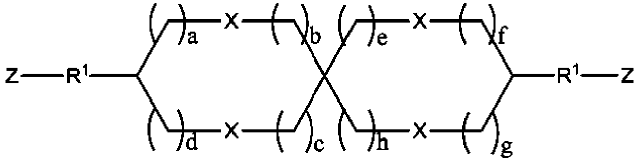 wobei jedes X unabhängig aus O, CHR², NR², S, PR² ausgewählt ist, wobei jedes R² ein Wasserstoffatom oder eine Alkylgruppe darstellt, die von 1 bis etwa 6 Kohlenstoffatome enthält, jedes R¹ ein Alkylen ist, das von 1 bis 4 Kohlenstoffatome enthält und jedes Z aus -OH oder -NHR³ ausgewählt ist, wobei R³ ein Wasserstoffatom oder eine Alkylgruppe darstellt, die von 1 bis etwa 6 Kohlenstoffatome enthält, wobei a, b, c, d, e, f, g und h jeweils unabhängig eine ganze Zahl von 0 bis 2 sind, solange die Summe von a, b, c und d von 1 bis 3 ist und die Summe von e, f, g, und h von 1 bis 3 ist.

4. Thermoplastisches Polyurethan nach Anspruch 3, wobei a gleich g ist, b gleich h ist, c gleich e ist und d gleich f ist.

5. Thermoplastisches Polyurethan nach Anspruch 3, wobei die spirocyclische Dialkylenverbindung zwei 6-gliedrige Rings enthält, X O ist, R¹ 1,1-Dimethylethyl ist, Z-OH ist, und
wobei entweder (i) a 0 ist, b 1 ist, c 1 ist, d 0 ist, e 1 ist, f 0 ist, g 0 ist und h 1 ist oder (ii) a 1 ist, b 0 ist, c 0 ist, d ist 1, e 0 ist, f 1 ist, g 1 ist und h 0 ist.

6. Thermoplastisches Polyurethan nach Anspruch 1, wobei die Strukturformel der spirocyclischen Dialkylenverbindung ist: 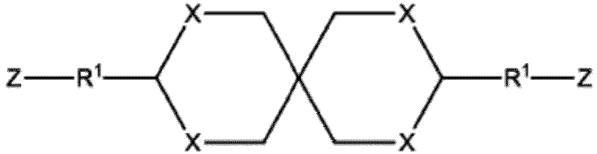 wobei jedes X aus O, CHR², NR², S, PR² ausgewählt ist, wobei jedes R² ein Wasserstoffatom oder eine Alkylgruppe darstellt, die von 1 bis etwa 6 Kohlenstoffatome enthält, jedes R¹ ein Alkylen ist, das von 1 bis 4 Kohlenstoffatome enthält und jedes Z aus -OH oder -NHR³ ausgewählt ist, wobei R³ ein Wasserstoffatom oder eine Alkylgruppe darstellt, die von 1 bis etwa 6 Kohlenstoffatome enthält.

7. Thermoplastisches Polyurethan nach Anspruch 6, wobei X O ist, R¹ 1,1-Dimethylethyl ist und Z-OH ist.

8. Thermoplastisches Polyurethan nach einem der Ansprüche 1 bis 7, wobei das aliphatische Polyisocyanat H12MDI umfasst.

9. Thermoplastisches Polyurethan nach einem der Ansprüche 1 bis 7, ferner umfassend (4) einen zusätzlichen Kettenverlängerer, umfassend ein aliphatisches oder cycloaliphatisches Diamin oder Glykol.

10. Verfahren zum Herstellen eines thermoplastischen Polyurethans (TPU), umfassend die Schritte:
(I) Reagieren (1) eines aliphatischen Polyisocyanats, (2) einer Alkylen-substituierten spirocyclischen Verbindung, umfassend ein Alkylen-substituiertes gesättigtes spirocyclisches Diol, ein Alkylen-substituiertes gesättigtes spirocyclisches Diamin oder eine Kombination davon, und (3) eines Polycaprolactonpolyesterpolyols;
wobei die Alkylen-substituierte spirocyclische Verbindung zwei Ringe enthält, die von 5 bis 7 Atome pro Ring enthalten, und wobei jeder Ring mit einer Alkylengruppe substituiert ist, die von 1 bis 4 Kohlenstoffatome enthält, die durch eine Hydroxygruppe oder ein Amin terminiert sind, wobei das Amin ein primäres oder ein sekundäres Amin ist.

11. Erzeugnis, umfassend ein thermoplastisches Polyurethan (TPU) nach Anspruch 1.

12. Verfahren eines Erhöhens der Hitze- und Chemikalienbeständigkeit eines Erzeugnisses, wobei das Erzeugnis eine wirksame Menge an thermoplastischem Polyurethan (TPU) umfasst, wobei das TPU das Reaktionsprodukt von (1) einem aliphatischn Polyisocyanat, (2) einer Alkylen-substituierten spirocyclischen Verbindung, umfassend ein Alkylen-substituiertes gesättigtes spirocyclisches Diol, ein Alkylen-substituiertes gesättigtes spirocyclisches Diamin oder eine Kombination davon, und (3) einem Polycaprolactonpolyesterpolyol enthält, wobei die Alkylen-substituierte spirocyclische Verbindung zwei Ringe enthält, die von 5 bis 7 Atome pro Ring enthalten, und wobei jeder Ring mit einer Alkylengruppe substituiert ist, die von 1 bis 4 Kohlenstoffatome enthält, die durch eine Hydroxygruppe oder ein Amin terminiert sind, wobei das Amin ein ein primäres oder ein sekundäres Amin ist.

## Revendications

1. Polyuréthane thermoplastique (TPU) comprenant le produit de réaction de (1) un polyisocyanate aliphatique, (2) un composé spirocyclique à substitution alkylène comprenant un diol spirocyclique saturé à substitution alkylène, une diamine spirocyclique saturée à substitution alkylène, ou une combinaison de ceux-ci, et (3) un polyol de polyester de polycaprolactone, dans lequel le composé spirocyclique à substitution alkylène contient deux cycles contenant de 5 à 7 atomes par cycle, et où chaque cycle est substitué par un groupe alkylène qui contient de 1 à 4 atomes de carbone, terminé par un groupe hydroxy ou une amine, où l'amine est une amine primaire ou secondaire.

2. Polyuréthane thermoplastique selon la revendication 1, dans lequel le composé spirocyclique à substitution alkylène est un spirohétérocycle contenant 2 hétéroatomes dans chaque cycle, où les hétéroatomes sont l'oxygène, l'azote, le soufre ou le phosphore.

3. Polyuréthane thermoplastique selon la revendication 1, dans lequel la formule structurelle du composé spirocyclique à substitution alkylène est : 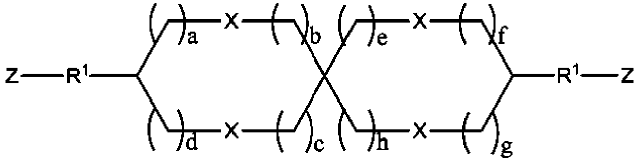 dans laquelle chaque X est choisi indépendamment parmi O, CHR², NR², S, PR², dans laquelle chaque R² représente un atome d'hydrogène ou un groupe alkyle contenant de 1 à environ 6 atomes de carbone, chaque R¹ est un alkylène contenant de 1 à 4 atomes de carbone et chaque Z est choisi parmi -OH ou -NHR³ dans laquelle R³ représente un atome d'hydrogène ou un groupe alkyle contenant de 1 à environ 6 atomes de carbone, dans laquelle a, b, c, d, e, f, g et h sont chacun indépendamment un nombre entier allant de 0 à 2 tant que la somme de a, b, c et d va de 1 à 3, et la somme de e, f, g et h va de 1 à 3.

4. Polyuréthane thermoplastique selon la revendication 3, dans lequel a est égal à g, b est égal à h, c est égal à e et d est égal à f.

5. Polyuréthane thermoplastique selon la revendication 3, dans lequel le composé dialkylène spirocyclique contient deux cycles à 6 chaînons, X est O, R¹ est le 1,1-diméthyléthyle, Z est -OH, et
où soit (i) a vaut 0, b vaut 1, c vaut 1, d vaut 0, e vaut 1, f vaut 0, g vaut 0 et h vaut 1 soit (ii) a vaut 1, b vaut 0, c vaut 0, d vaut 1, e vaut 0, f vaut 1, g vaut 1 et h vaut 0.

6. Polyuréthane thermoplastique selon la revendication 1, dans lequel la formule structurelle du composé dialkylène spirocyclique est : 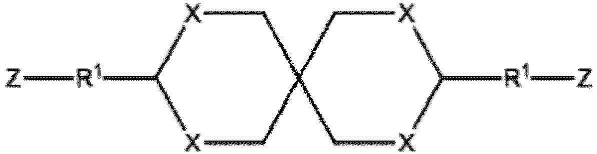 dans laquelle chaque X est choisi parmi O, CHR², NR², S, PR², dans laquelle chaque R² représente un atome d'hydrogène ou un groupe alkyle contenant de 1 à environ 6 atomes de carbone, chaque R¹ est un alkylène contenant de 1 à 4 atomes de carbone et chaque Z est choisi parmi -OH ou - NHR³, dans laquelle R³ représente un atome d'hydrogène ou un groupe alkyle contenant de 1 à environ 6 atomes de carbone.

7. Polyuréthane thermoplastique selon la revendication 6 dans lequel X est O, R¹ est le 1,1-diméthyléthyle, et Z est -OH.

8. Polyuréthane thermoplastique selon l'une quelconque des revendications 1 à 7, dans lequel le polyisocyanate aliphatique comprend H12MDI.

9. Polyuréthane thermoplastique selon l'une quelconque des revendications 1 à 7, comprenant en outre (4) un allongeur de chaîne supplémentaire comprenant une diamine aliphatique ou cycloaliphatique ou un glycol.

10. Procédé de fabrication d'un polyuréthane thermoplastique (TPU) comprenant les étapes consistant à :
(I) faire réagir (1) un polyisocyanate aliphatique, (2) un composé spirocyclique à substitution alkylène comprenant un diol spirocyclique saturé à substitution alkylène, une diamine spirocyclique saturée à substitution alkylène, ou une combinaison de ceux-ci, et (3) un polyol de polyester de polycaprolactone ;
dans lequel le composé spirocyclique à substitution alkylène contient deux cycles contenant de 5 à 7 atomes par cycle, et où chaque cycle est substitué par un groupe alkylène qui contient de 1 à 4 atomes de carbone, terminé par un groupe hydroxy ou une amine, où l'amine est une amine primaire ou secondaire.

11. Article comprenant un polyuréthane thermoplastique (TPU), selon la revendication 1.

12. Procédé d'augmentation de la résistance thermique et chimique d'un article, où l'article comprend une quantité efficace d'un polyuréthane thermoplastique (TPU) dans lequel le TPU comprend le produit de réaction de (1) un polyisocyanate aliphatique, (2) un composé spirocyclique à substitution alkylène comprenant un diol spirocyclique saturé à substitution alkylène, une diamine spirocyclique saturée à substitution alkylène, ou une combinaison de ceux-ci, et (3) un polyol de polyester de polycaprolactone, dans lequel le composé spirocyclique à substitution alkylène contient deux cycles contenant de 5 à 7 atomes par cycle, et où chaque cycle est substitué par un groupe alkylène contenant de 1 à 4 atomes de carbone, terminé par un groupe hydroxy ou une amine, où l'amine est une amine primaire ou secondaire.
